Europäisches Patentamt

European Patent Office

Office européen des brevets

(11) Numéro de publication: **0 196 261**
**A2**

(12) **DEMANDE DE BREVET EUROPEEN**

(21) Numéro de dépôt: **86420075.3**

(22) Date de dépôt: **17.03.86**

(51) Int. Cl.⁴: **G 02 C 5/00**

(30) Priorité: **26.03.85 FR 8504624**

(43) Date de publication de la demande: **01.10.86**
**Bulletin 86/40**

(84) Etats contractants désignés: **DE FR GB IT**

(71) Demandeur: **LAMY JEUNE FILS S.A., 34, rue Wladimir Gagneur, F-39400 Morez (FR)**

(72) Inventeur: **Lamy, Patrick, Saillenard, F-71580 Sagy (FR)**

(74) Mandataire: **Moinas, Michel, Cabinet Michel Moinas 13 Chemin du Levant, F-01210 Ferney-Voltaire (FR)**

(54) **Insert pour monture de lunettes.**

(57) L'insert (6) présente un profil sensiblement en U; il est rigide et s'enchâsse dans une partie (3) de la monture (1) spécialement amincie à cet effet (ou âme) selon un axe sensiblement perpendiculaire au plan des verres (2).

Il comprend sur le côté intérieur une rainure (7) qui, au montage, vient prolonger et compléter le cercle drageoir (4) de la monture (1).

L'insert s'enchâsse sur l'âme (3) par un logement (8) défini par la forme en U et les faces avant (5, 9) de la monture (1) et de l'insert (6) respectivement viennent en coïncidence. L'insert (6) peut porter le tenon-charnière (10).

0196261


INSERT POUR MONTURE DE LUNETTES


La présente invention se rapporte à un insert pour monture de lunettes à cercle drageoir, cet insert présentant un profil sensiblement en U.

Aux fins d'illustration de l'état de la technique, nous citerons les exposés d'invention FR 2 504 282 et FR 2 475 242, mais pour mémoire seulement car ils visent des objets différents.

Dans FR 2 504 282, on présente un support en U en matière plastique, qui se rapporte purement et simplement sur la monture.

Dans FR 2 475 242, on décrit un appui nasal en matière souple, échancré de façon à ce qu'il puisse servir de surface d'appui pour les verres.

Selon l'invention contraire, on propose un insert qui présente un profil sensiblement en U et qui est rigide. Il s'enchâsse dans une partie de la monture spécialement amincie à cet effet selon un axe sensiblement perpendiculaire au plan des verres portés par cette monture; il comprend sur le côté intérieur une rainure qui, au montage, vient prolonger et compléter le cercle drageoir.

L'invention se rapporte également à des lunettes comprenant un ou plusieurs des inserts définis ci-dessus, en nombre égal ou différent sur chaque côté de la monture, en position symétrique ou non.

Avantageusement, l'insert s'enchâsse par la face avant de la monture et le cercle drageoir et la rainure on la même largeur. En outre, l'insert peut porter le tenon-charnière.

Sans que cela soit véritablement indispensable, l'insert peut être maintenu en place, en partie au moins, par le verre fixé sur la monture. On peut aussi prévoir des moyens de maintien complémentaires ou indépendants, par exemple par clipsage, collage, vissage ou autre forme de verrouillage.

L'invention sera mieux comprise en référence au dessin annexé, donné à titre d'exemple non limitatif. Dans ce dessin,

- la figure 1 est une vue en perspective de la monture et de son insert avant le montage, dans une première forme d'exécution,

- la figure 2 est une vue de dessus de l'insert illustré à la figure 1,

- la figure 3 est une vue correspondant à la figure 1, après montage, et

0196261

- la figure 4 est une vue de la monture avec un insert, dans un deuxième forme d'exécution.

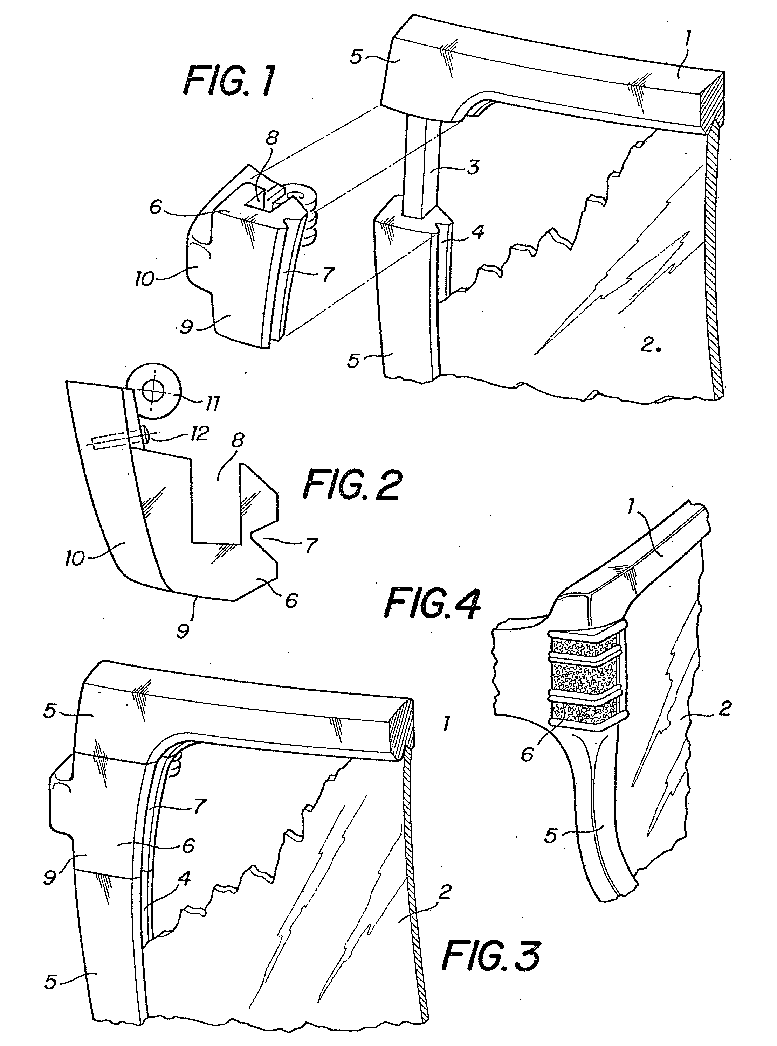

Sur la figure 1, on a représenté, pour sa partie superieure droite, une monture de lunettes 1 recevant un verre optique 2. Cette monture 1 comprend une partie amincie ou âme 3, réalisée par enlèvement de matière sur la face avant 5 et les côtés.

Si nécessaire, on peut également retirer de la matière sur la face arrière de la monture 1. On laisse alors le creux ou on le ferme à l'aide d'une pièce complémentaire.

Cette monture 1 comprend un cercle drageoir 4 dans lequel vient se loger le verre optique 2.

Sur cette même figure 1 on a représenté l'insert 6 muni d'une rainure 7 du côté intérieur, c'est-à-dire du côté où se situe le verre optique 2. Cet insert 6 présente un profil sensiblement en U de façon à dégager un logement 8 qui va lui servir à s'enchâsser dans la monture 1 sur l'âme 3. De la sorte, la face avant 9 de l'insert 6 va venir en coïncidence avec la face avant 5 de la monture 1.

Au montage, on se retrouve dans la position représentée à la figure 3, où on constate bien que les deux faces avant 5, 9 sont venues en coïncidence; de même la rainure 7 est venue en prolongement et en coïncidence avec le cercle drageoir 4 de façon à le compléter.

0196261

Sur ces figures 1 et 3, l'insert 6 porte le tenon-charnière 10, comme cela est encore plus visible sur la figure 2, qui est une vue de dessus. Le tenon-charnière 10 vient se fixer sur la charnière 11 par l'intermédiaire de vis 12.

Dans la figure 4, on a représenté au contraire un insert 6 d'un modèle plus simple portant ici un motif décoratif. Il ne porte pas le tenon-charnière et peut de la sorte s'insérer sur la monture 1 ailleurs que sur un côté. Comme on le comprendra aisément en se référant aux figures, l'insert 6 peut être maintenu en place simplement par le verre optique 2, mais il n'est pas nécessaire que ce verre optique 2 contribue à son maintien. On notera au contraire que le verre optique 2 peut tenir sur la monture nue, avant mise en place de l'insert 6. L'insert 6 alors est immobilisé par tous moyens tels que le clipsage ou autre forme de verrouillage. Sur les figures, les moyens n'ont pas été représentés, car l'insert 6 est simplement collé.

En variante non représentée, le logement 8 comprend une tige filetée qui, au montage, va traverser l'âme 3 de part en part, dans un perçage prévu à cet effet. Un écrou se vissant sur la tige filetée va bloquer l'insert 6 sur l'âme 3 et assujettir cet insert 6 avec la monture 1.

Bien entendu, le maintien en place de l'insert 6 peut être réalisé à la fois par les moyens indiqués ci-dessus, par exemple le clipsage, et par la présence du verre optique 2.

Par rapport aux éléments de l'état de la technique citée au début, on notera que l'insert est rigide. Un insert en matière souple, notamment dans la forme d'exécution où il porte le tenon-charnière, serait inopérant et ne permettrait pas de réaliser une paire de lunettes viable.

En outre, l'insert selon l'invention, qui peut s'enchâsser par la face avant comme représenté sur les figures, ou bien par la face arrière, voit ses possibilités de déplacement limitées au plan perpendiculaire au plan des verres optiques, au contraire de l'appui nasal de l'exposé FR 2 475 242, qui ne peut travailler que dans le plan des verres, et non perpendiculairement.

Les lunettes selon l'invention peuvent comprendre un ou plusieurs inserts disposés n'importe où sur la monture, au choix de l'utilisateur pour des raisons techniques ou esthétiques. Ces inserts peuvent être en nombres égaux ou non de chaque côté de la monture, et disposés symétriquement ou non.

Enfin, lorsque l'insert est simplement verrouillé, par exemple par clipsage, il est possible de le retirer et de le remplacer par un autre insert de configuration identique, mais d'esthétique différente. L'utilisateur peut alors acheter sa monture avec un jeu d'inserts interchangeables, de façon à personnaliser ses lunettes.

REVENDICATIONS

1. Insert pour monture de lunettes à cercle drageoir (4) présentant un profil sensiblement en U, caractérisé en ce qu'il est rigide et s'enchâsse dans une partie (3) de la monture (1) spécialement amincie à cet effet selon un axe sensiblement perpendiculaire au plan des verres (2) portés par cette monture (1), et en ce qu'il comprend sur le côté intérieur une rainure (7) qui, au montage, vient prolonger et compléter le cercle drageoir (4).

2. Insert selon la revendication 1 caractérisé en ce qu'il s'enchâsse par la face avant (5) de la monture.

3. Insert selon la revendication 1 caractérisé en ce que le cercle drageoir (4) et la rainure (7) ont la même largeur.

4. Insert selon les revendications 1 ou 2 caractérisé en ce qu'il est maintenu sur la monture (1) par clipsage, collage ou vissage.

5. Insert selon les revendications 1 ou 4 caractérisé en ce qu'il est maintenu, en partie au moins, par le verre (2) fixé sur la monture (1).

- 7 -

0196261

6.   Insert selon les revendications 1 ou 2, caractérisé en ce qu'il porte le tenon-charnière (10).

7.   Lunettes comprenant au moins un insert (6) selon la revendication 1.

**FIG. 1**

**FIG. 2**

**FIG. 4**

**FIG. 3**